# EUROPEAN PATENT APPLICATION

(11) **EP 3 422 246 A1**
(43) Date of publication of application: **02.01.2019**
(21) Application number: 17755777.4
(22) Date of filing: 20.02.2017
(51) Int. Cl.: G06K 9/00

(54) **METHOD FOR AWAKENING INTELLIGENT ROBOT, AND INTELLIGENT ROBOT**

(30) Priority: 23.02.2016 CN 201610098983
(71) Applicant: Yutou Technology (Hangzhou) Co., Ltd., Hangzhou City, Zhejiang 311199 (CN)
(72) Inventor: CHEN, Mingxiu, Hangzhou Zhejiang 311199 (CN)
(74) Representative: AWA Sweden AB
(86) International application number: PCT/CN2017/074044
(87) International publication number: WO 2017/143948

(57) **Abstract**

Disclosed are a method for awakening an intelligent robot as well as an intelligent robot, falling within the technical field of intelligent devices. The method comprises: step S1, acquiring image information by using an image acquiring apparatus on an intelligent robot (S1); step S2, determining whether the image information contains human face information (S2), and if not, returning to step S1; step S3, extracting a plurality of pieces of characteristic point information on the human face information, and determining whether the human face information indicates a front human face directly facing the image acquiring apparatus according to the characteristic point information, and going to step S4 when it is determined that the human face information indicates a front human face directly facing the image acquiring apparatus (S3); and step S4, awakening the intelligent robot, and subsequently loging out (S4). The beneficial effects of the technical solution are: being able to provide an operation method for awakening an intelligent robot without any action, reducing the operation complexity of awakening the intelligent robot, and improving user experience.

## Description

### Technical Field

The present invention relates to the technical field of intelligent devices, and in particular, to a method for awakening an intelligent robot as well as an intelligent robot.

### Background Technology

In the existing technology, the way of operating an intelligent robot usually includes the following types: 1) for the intelligent robot provided with inputting device, it is possible to input control command via a corresponding inputting device such as an external keyboard, a built-in touch screen or other remote-control inputting device so as to cause the intelligent robot to execute corresponding operation; 2) for some intelligent robots, it is possible to conduct control via voice input, and these intelligent robots will recognize the inputted voice according to a built-in voice recognizing model and execute corresponding operations; 3) likewise, for some intelligent robots, it is possible to conduct control by making a gesture, and these intelligent robots will recognize the gesture according to a built-in gesture recognizing model and execute corresponding operation.

Based on the foregoing setting, in a normal intelligent robot, awakening operation is usually conducted also via the methods mentioned above, and the relatively common method is awakening the intelligent robot by inputting a specific voice statement (e.g., users say a specified statement such as 'Hi', 'Ni-hao' etc. to the intelligent robot) or making a specific gesture (e.g., users make a specified gesture such as waving hand etc.). However, regardless of the way of awakening, users have to output a certain behavior, and if no body movement or voice is outputted by users, the awakening operation of intelligent robot cannot be triggered. Therefore, it will be relatively complex to awaken the intelligent robot, and user experience will be reduced.

### Detailed Description of the Invention

In view of the problems of the existing technology, a method for awakening an intelligent robot as well as an intelligent robot are provided to enable users to awaken an intelligent robot without any action, thus reducing the operation complexity of awakening the intelligent robot and improving user experience.

The aforementioned technical solution specifically includes:
A method for awakening an intelligent robot, characterized by comprising:
step S1, acquiring image information by an image acquiring device on the intelligent robot;
step S2, determining whether the image information contains human face information:
   if not, returning to the step S1;
step S3, extracting a plurality of pieces of characteristic point information on the human face information, and determining whether the human face information indicates a front human face directly facing the image acquiring apparatus according to the characteristic point information, and going to step S4 when it is determined that the human face information indicates a front human face directly facing the image acquiring apparatus;
step S4, awakening the intelligent robot, and subsequently loging out.

Preferably, in the step S2 of the method for awakening an intelligent robot, a human face detector is used to determine whether the image information contains the human face information.

Preferably, in the step S2 of the method for awakening an intelligent robot, position information and size information related to the human face information will be acquired when it is determined that the image information contains the human face information;
the step S3 specifically comprising:
step S31, forecasting model by means of the characteristic points formed via pre-training, and extracting a plurality of characteristic points in the human face information according to the position information and the size information;
step S32, determining contour information of each part in the human face information according to the plurality of pieces of characteristic point information;
step S33, acquiring a first distance from the center point of nose to the center point of left eye as well as a second distance from the center point of nose to the center point of right eye in the human face information;
step S34, determining whether the difference value between the first distance and the second distance is included in a pre-set range of difference value;
   if so, it will be determined that the human face information indicates the front human face, and subsequently going to the step S4;
   if not, it will be determined that the human face information does not indicate the front human face, and subsequently returning to the step S1.

Preferably, in the method for awakening an intelligent robot, after the execution of the step S3, a staying-time determination step will be executed first if it is determined that the human face information contains the front human face, and subsequently the step S4 will be executed;
the staying-time determination step specifically comprising:
step A1, tracking and acquiring the human face information continuously, and keeping a record of the duration of the stay of the front human face;
step A2, determining whether the duration of the stay of the front human face exceeds a pre-set 1st threshold value:
   if so, going to the step S4;
   if not, returning to the step S1.

Preferably, in the step S2 of the method for awakening an intelligent robot, position information and size information related to the human face information will be recorded when it is determined that the image information contains the human face information;
after the execution of the step A2, a distance determination step will be executed first if it is determined that the duration of the stay of the front human face exceeds the 1st threshold value, and subsequently the step S4 will be executed;
the distance determination step specifically comprising:
step B1, determining whether the size information is not less than a pre-set 2nd threshold value:
if so, going to the step S4;
if not, returning to the step S1.

Preferably, in the step S2 of the method for awakening an intelligent robot, position information and size information related to the human face information will be recorded when it is determined that the image information contains the human face information;
after the execution of the step S3, a distance determination step will be executed first if it is determined that the human face information contains the front human face, and subsequently the step S4 will be executed;
the distance determination step specifically comprising:
step B1, determining whether the size information is not less than a pre-set 2nd threshold value:
if so, going to the step S4;
if not, returning to the step S1.

Preferably, in the method for awakening an intelligent robot, after the execution of the step B1, a staying-time determination step will be executed first if it is determined that the size information is not less than the 2nd threshold value, and subsequently the step S4 will be executed:
the staying-time determination step specifically comprising:
step A1, tracking and acquiring the human face information continuously, and keeping a record of the duration of the stay of the front human face;
step A2, determining whether the duration of the stay of the front human face exceeds a pre-set 1st threshold value:
   if so, going to the step S4;
   if not, returning to the step S1.

Preferably, in the method for awakening an intelligent robot, the 1st threshold value is 2 seconds.

Preferably, in the method for awakening an intelligent robot, the 2nd threshold value is 400 pixels.

An intelligent robot characterized by using the foregoing method for awakening an intelligent robot.

The beneficial effects of the technical solution are: being able to provide an operation method for awakening an intelligent robot without any action, reducing the operation complexity of awakening the intelligent robot, and improving user experience.

### Description of the Drawings

Fig.1 is an overall flow diagram schematically showing a method for awakening an intelligent robot in a preferred embodiment of the present invention;
Fig.2 is a schematic diagram of the step of determining whether the human face information indicates a front human face directly facing the image acquiring apparatus in a preferred embodiment of the present invention;
Fig.3 is a flow diagram schematically showing the intelligent robot awakening method including the step of determining the duration of stay in a preferred embodiment of the present invention;
Figs.4-5 are a flow diagram schematically showing the intelligent robot awakening method including the step of determining the duration of stay and the step of determining the distance in a preferred embodiment of the present invention;
Fig.6 is a flow diagram schematically showing the intelligent robot awakening method including the step of determining the distance in a preferred embodiment of the present invention.

### Embodiments of the Invention

The technical solutions in the embodiments of the present invention will be clearly and completely described hereafter in reference to the drawings in the embodiments of the present invention. It is apparent that the described embodiments are merely a part of embodiments rather than all the embodiments of the present invention. Based on the embodiments in the present invention, all the other embodiments obtained by the artisans concerned without creation fall within the scope of claims of the present invention.

It should be noted that the embodiments in the present invention as well as the characteristics in the embodiments can be combined together without conflicting with each other.

The present invention will be further described in reference to attached drawings and embodiments, but they are not used as the limitation of the present invention.

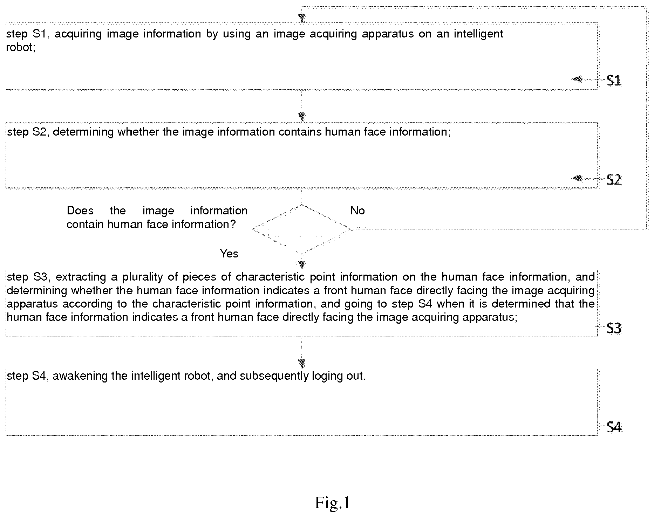

In an preferred embodiment of the present invention, based on the problems of the existing technology, a method for awakening intelligent robot is provided, and it specifically comprises the following steps as shown in Fig.1.
step S1, acquiring image information by using an image acquiring apparatus on an intelligent robot;
step S2, determining whether the image information contains human face information;
   and if not, returning to step S1;
step S3, extracting a plurality of pieces of characteristic point information on the human face information, and determining whether the human face information indicates a front human face directly facing the image acquiring apparatus according to the characteristic point information, and going to step S4 when it is determined that the human face information indicates a front human face directly facing the image acquiring apparatus;
step S4, awakening the intelligent robot, and subsequently loging out.

In the step S1 of an embodiment, the image acquiring device may be a camera on the intelligent robot, i.e., trying to acquire the image information in the capturing area by means of the camera on the intelligent robot.

Subsequently, determining whether the acquired image information contains human face information in accordance with a certain determination rule. Specifically, determining whether the image information contains human face information by means of the pre-trained human face detector. The human face detector actually may be a human face detecting model formed by pre-training, and the detecting model may be formed by pre-inputting a plurality of human face training samples and conducting repetitive learning, then the detecting model will be used in actual image information detection so as to detect whether the image information contains the human face information for indicating human face. In this step, the human face information may include not only the human face information indicating a front human face but also the human face information indicating a side human face or a part of human face, and these detection standards can be realized by using the pre-inputted training samples to control the generated content of the human face detector. In the existing technology, there are many ways to realize the process of forming human face detector by conducting repetitive learning for training samples, and their detailed description will be omitted herein.

In this embodiment, if it is determined that the image information does not contain any human face information, it will return to the step S1 so as to continue acquiring image information by the image acquiring device; if it is determined that the image information contains human face information, it will go to step S3. In the step S3, determining whether the human face information indicates a front human face directly facing the image acquiring device by extracting a plurality of pieces of characteristic point information from the human face information; if so, it will go to step S4 so as to awaken the intelligent robot according to the detected front human face (i.e., determining that the user intends to operate the intelligent robot); if not, it will return to the step S1 so as to continue acquiring image information by the image acquiring device and continue determining the human face information.

In conclusion, by using the technical solution of the present invention, users are able to awaken and operate an intelligent robot just by directly facing the image acquiring device (e.g., camera) of the intelligent robot, thus avoiding the problem of conventional method, i.e., the intelligent robot can be awakened and operated only by inputting voice or gesture.

In the step S2 of a preferred embodiment of this invention, if it is determined that the image information contains human face information, the position information and size information related to human face information will be acquired;

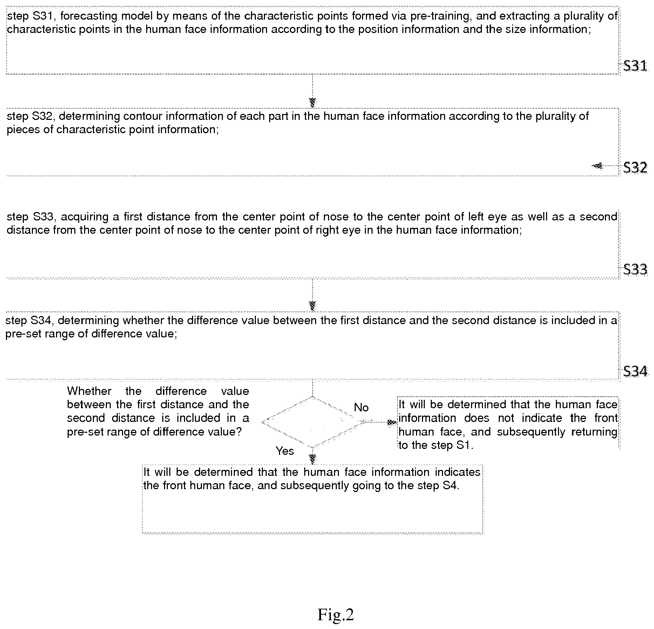

As shown in Fig.2, the step S3 specifically comprises:
step S31, forecasting model by means of the characteristic points formed via pre-training, and extracting a plurality of characteristic points in the human face information according to the position information and the size information;
step S32, determining contour information of each part in the human face information according to the plurality of pieces of characteristic point information;
step S33, acquiring a first distance from the center point of nose to the center point of left eye as well as a second distance from the center point of nose to the center point of right eye in the human face information;
step S34, determining whether the difference value between the first distance and the second distance is included in a pre-set range of difference value;
   if so, it will be determined that the human face information indicates the front human face, and subsequently going to the step S4;
   if not, it will be determined that the human face information does not indicate the front human face, and subsequently returning to the step S1.

Specifically, in the step S2 of a preferred embodiment of this invention, if it is determined that the obtained image information contains human face information, the position information and size information of the human face information will be obtained while obtaining the human face information.

The position information refers to the position of the human face in the image information, and the human face is indicated by the human face information. For instance, the human face is located just in the center of the image, or the upper left of the image, or the lower right of the image, etc..

The size information refers to the size of the human face indicated by the human face information, and is usually indicated by pixels.

In the steps S31-S32, firstly using the pre-trained characteristic point forecasting model, and extracting a plurality of characteristic points from the human face information according to the position information and size information related to the human face information, then determining the contour information of each part in the human face information according to the extracted characteristic points. The characteristic point forecasting model may also be a forecasting model formed by inputting and learning a plurality of training samples in advance, and the 68 characteristic points on human face will be extracted and forecast, and thereby the information such as the contours of eyebrow, eyes, nose, mouth and the whole face will be obtained to draw the general contours of human face.

Subsequently, in the step S33 of a preferred embodiment of the present invention, the position of nose center point, the position of left eye center point and the position of right eye center point will be separately obtained according to the contour information, and the distance between the position of nose center point and the position of left eye center point will be obtained as 1st distance by means of calculation, and the distance between the position of nose center point and the position of right eye center point will be obtained as 2nd distance by means of calculation. Subsequently, calculating the difference value between the 1st distance and the 2nd distance, and determining whether the difference value is within a pre-set range of difference value; if so, it means that the human face information indicates a front human face directly facing the image capturing device of intelligent robot; if not, it means that the human face information does not indicate a front human face.

Specifically, in a preferred embodiment of this invention, for the front human face, the distance between nose center point and left eye center point should be the same as or close to the distance between nose center point and right eye center point due to the symmetry of human face. If the human face slightly turns to one side, the two distances will inevitably change. For instance, if the human face turns left, the distance between nose center point and right eye center point will surely decrease, thus the difference value between the two distances will increase. Likewise, if the human face turns right, the distance between nose center point and left eye center point will surely decrease, thus the difference value between the two distances will also increase.

Therefore, as mentioned above, under the most ideal circumstance, if the human face information indicates a front human face, the two distances should be the same, i.e., the difference value between the two distances should be 0. However, under actual circumstance, the absolute symmetry of human face will never occur, so even if the human face information indicates a front human face, there will still be a difference value between the two distances, but the difference value should be relatively small. Therefore, in a preferred embodiment of this invention, the range of difference value should be set as a relatively small range so as to ensure that it is able to be determined whether the current human face information indicates a front human face directly facing the image acquiring device.

In a preferred embodiment of this invention, after the execution of the step S3, a staying-time determination step will be executed first if it is determined that the human face information contains the front human face, and subsequently the step S4 will be executed;
the staying-time determination step specifically comprising:
step A1, tracking and acquiring the human face information continuously, and keeping a record of the duration of the stay of the front human face;
step A2, determining whether the duration of the stay of the front human face exceeds a pre-set 1st threshold value:
   if so, going to the step S4;
   if not, returning to the step S1.

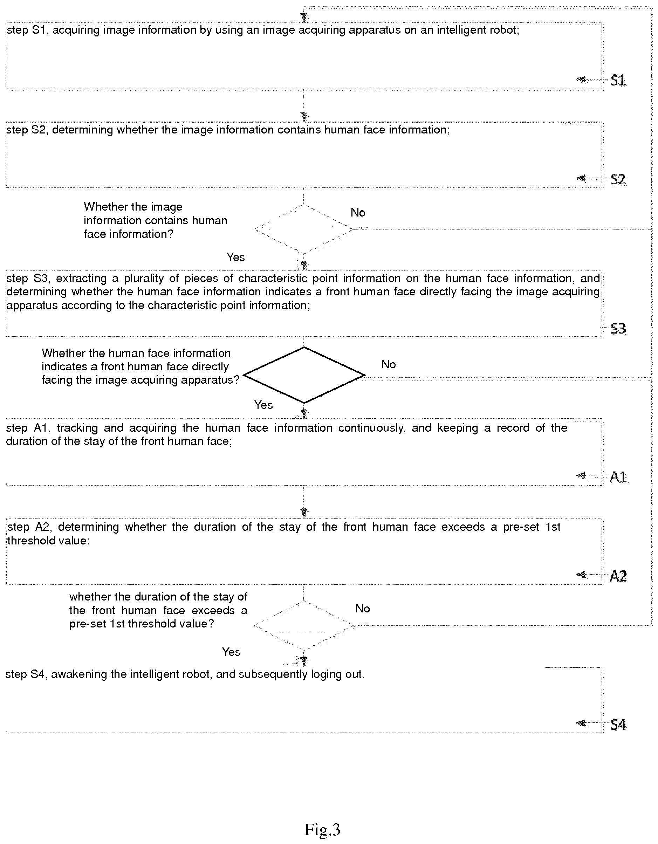

As shown in Fig.3, in a preferred embodiment of this invention, the whole awakening process including the staying-time determination step comprises:
step S1, acquiring image information by using an image acquiring apparatus on an intelligent robot;
step S2, determining whether the image information contains human face information;
   and if not, returning to step S1;
step S3, extracting a plurality of pieces of characteristic point information on the human face information, and determining whether the human face information indicates a front human face directly facing the image acquiring apparatus according to the characteristic point information;
   If not, returning to step S1;
step A1, tracking and acquiring the human face information continuously, and keeping a record of the duration of the stay of the front human face;
step A2, determining whether the duration of the stay of the front human face exceeds a pre-set 1st threshold value:
   if so, going to the step S4;
   if not, returning to the step S1.
step S4, awakening the intelligent robot, and subsequently loging out.

Specifically, in the process of this embodiment, firstly executing the step of front human face determination as mentioned above. When it is determined that the currently-recognized human face information indicates a front human face, the staying-time determination step will be executed, i.e., tracking and acquiring the human face information continuously, and continuously comparing the current human face information with previous human face information so as to determine whether the human face information indicating front human face has changed or not, and finally keeping a record of the duration without the change of human face information, i.e., the duration of the stay of the human face information.

In this embodiment, for the comparison of the human face information, it is possible to set a range for the difference value of comparison so as to allow the human face information to change within a tiny range.

In this embodiment, applying the staying-time determination step to the whole awakening method is the step mentioned above (as shown in Fig.3): firstly executing the step of determining a front human face, and when it is determined that the current human face information indicates a front human face, the staying-time determination step will be executed. Only when it satisfies the front human face determination criterion and the staying-time determination criterion at the same time, it will be thought that the intelligent robot can be awakened.

In a preferred embodiment of this invention, it is possible to set the pre-set 1st threshold value as the normal response time of a person when he or she is being stared at. For instance, it may be set as 1 second or 2 second.

In the step S2 of a preferred embodiment of this invention, as mentioned above, if it is determined that the image information contains human face information, the position information and size information related to human face information will be recorded.

The aforementioned awakening method also includes a distance determining step. This step relies on the recorded position information and size information. And specifically:
step B1, determining whether the size information is not less than a pre-set 2nd threshold value:
if so, going to the step S4;
if not, returning to the step S1.

Specifically, in a preferred embodiment of this invention, the function of the distance determining step is to determine whether the human face is close enough to the image acquiring device (camera): if so, it will be determined that the user intends to awaken the intelligent robot; if not, it will be determined that the user does not intend to awaken the intelligent robot.

In a preferred embodiment of this invention, the 2nd threshold value may be a value suitable for the size of the view finder of the image acquiring device. For instance, the size of view finder is usually 640 pixels, and the 2nd threshold value may be set as 400 pixels. Therefore, if the size information related to human face information is not less than the 2nd threshold value (i.e., the size of human face is not less than 400 pixels), it will be thought that the user is relatively close to the image acquiring device at this time. On the contrary, it will be thought that the user is relatively far from the image acquiring device.

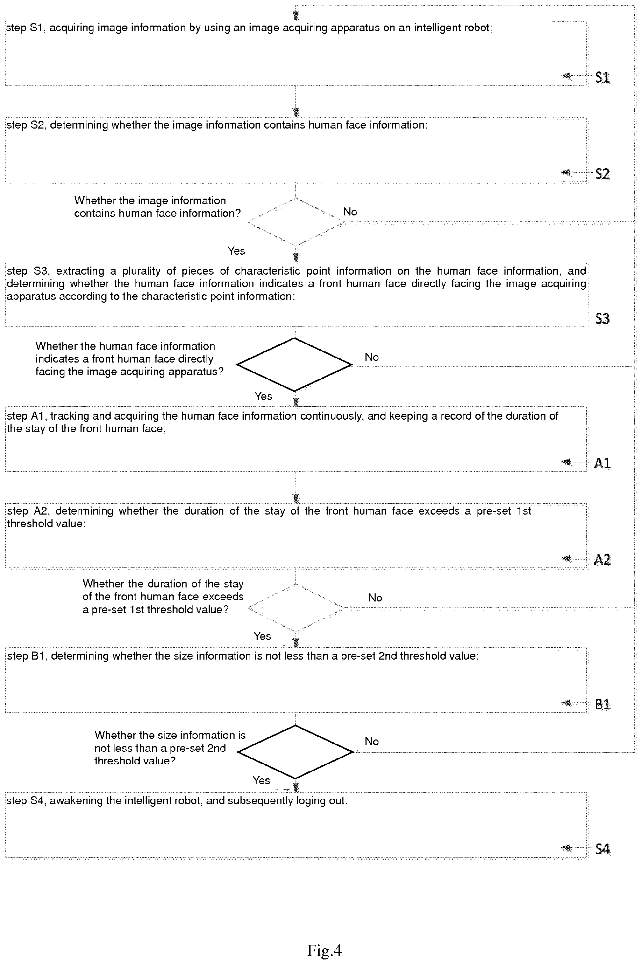

In a preferred embodiment of this invention, as shown in Fig.4, the process formed by using the stay-time determining step and distance determining step together with the awakening method comprises:
step S1, acquiring image information by using an image acquiring apparatus on an intelligent robot;
step S2, determining whether the image information contains human face information;
   and if not, returning to step S1;
step S3, extracting a plurality of pieces of characteristic point information on the human face information, and determining whether the human face information indicates a front human face directly facing the image acquiring apparatus according to the characteristic point information:
   If not, returning to step S1;
step A1, tracking and acquiring the human face information continuously, and keeping a record of the duration of the stay of the front human face;
step A2, determining whether the duration of the stay of the front human face exceeds a pre-set 1st threshold value:
   If not, returning to step S1;
step B1, determining whether the size information is not less than a pre-set 2nd threshold value:
   if so, going to the step S4;
   if not, returning to the step S1.
step S4, awakening the intelligent robot, and subsequently loging out.

In this embodiment, the sequence of the determination is: determining whether the image contains human face information→determining whether the human face information indicates a front human face→determining whether the staying-time of the human face information conforms to the criterion→determining whether the size information related to the human face information conforms to the criterion.

Therefore, in this embodiment, only when the following three conditions are satisfied, it will be thought that the user intends to awaken the intelligent robot, and the operation for awakening the intelligent robot will be executed according to the result of determination:
(1) The human face information indicates a front human face;
(2) The duration of the stay of human face exceeds the 1st threshold value;
(3) The size of the human face in the view finder is not less than the 2nd threshold value.

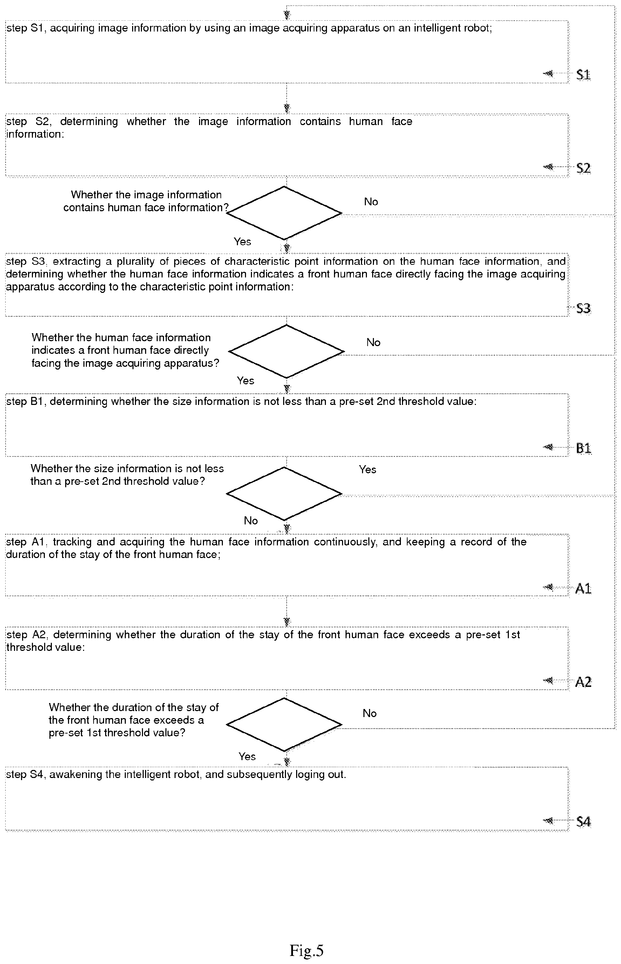

In another preferred embodiment of this invention, likewise, as shown in Fig.5, the whole awakening process formed by using the stay-time determining step and the distance determining step at the same time comprises:
step S1, acquiring image information by using an image acquiring apparatus on an intelligent robot;
step S2, determining whether the image information contains human face information;
   and if not, returning to step S1;
step S3, extracting a plurality of pieces of characteristic point information on the human face information, and determining whether the human face information indicates a front human face directly facing the image acquiring apparatus according to the characteristic point information:
   If not, returning to step S1;
step B1, determining whether the size information is not less than a pre-set 2nd threshold value:
   If not, returning to step S1;
step A1, tracking and acquiring the human face information continuously, and keeping a record of the duration of the stay of the front human face;
step A2, determining whether the duration of the stay of the front human face exceeds a pre-set 1st threshold value:
   If so, going to step S4;
   If not, returning to step S1;
step S4, awakening the intelligent robot, and subsequently loging out.

In this embodiment, the specific determination process is: determining whether the image contains human face information→determining whether the human face information indicates a front human face→determining whether the size information related to the human face information conforms to the criterion→determining whether the staying-time of the human face information conforms to the criterion. Likewise, in this embodiment, only when the three conditions are satisfied, it will be thought that the intelligent robot may be awakened.

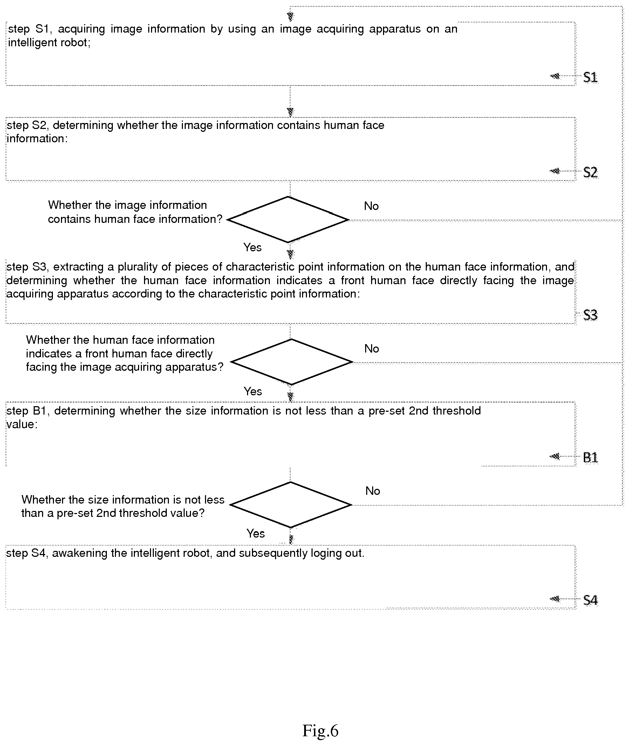

In another preferred embodiment of this invention, it is possible to only add a distance determining step to the awakening method, and as shown in Fig.6, it specifically comprises:
step S1, acquiring image information by using an image acquiring apparatus on an intelligent robot;
step S2, determining whether the image information contains human face information;
   and if not, returning to step S1;
step S3, extracting a plurality of pieces of characteristic point information on the human face information, and determining whether the human face information indicates a front human face directly facing the image acquiring apparatus according to the characteristic point information:
   If not, returning to step S1;
step B1, determining whether the size information is not less than a pre-set 2nd threshold value:
   if so, going to the step S4;
   If not, returning to step S1;
step S4, awakening the intelligent robot, and subsequently loging out.

In this embodiment, when the two conditions are satisfied at the same time, i.e., (1) The human face information indicates a front human face;
(3) The size of the human face in the view finder is not less than the 2nd threshold value; it will be thought that the user intends to awaken the intelligent robot, and the operation for awakening the intelligent robot will be executed according to the result of determination.

In conclusion, the technical solution of this invention provides three conditions for determining whether to execute the operation of awakening intelligent robot or not: (1) The human face information indicates a front human face; (2) The duration of the stay of human face exceeds the 1st threshold value; (3) The size of the human face in the view finder is not less than the 2nd threshold value. Each determination condition has its corresponding determination process. Among them, the determination condition of (1) is necessary, and the determination condition of (2) and (3) is optional for the awakening method of this invention, thus different kinds of awakening method may derive from this method. These derivative awakening methods as well as the modifications and updates based on these awakening methods shall be included in the protection scope of this invention.

In a preferred embodiment of this invention, an intelligent robot is also provided using the aforementioned method for awakening intelligent robot.

The description above is only a preferred embodiment of this invention, and thus will not limit the embodiments and the protection scope of this invention. As is realized by those in the art, any solution obtained by making equivalent replacements and obvious changes on the basis of the description of this invention as well as drawings shall be included in the protection scope of this invention.

## Claims

1. A method for awakening an intelligent robot, **characterized by** comprising:
step S1, acquiring image information by an image acquiring device on the intelligent robot;
step S2, determining whether the image information contains human face information:
if not, returning to the step S1;
step S3, extracting a plurality of pieces of characteristic point information on the human face information, and determining whether the human face information indicates a front human face directly facing the image acquiring apparatus according to the characteristic point information, and going to step S4 when it is determined that the human face information indicates a front human face directly facing the image acquiring apparatus;
step S4, awakening the intelligent robot, and subsequently loging out.

2. The method for awakening an intelligent robot according to claim 1, wherein in the step S2, a human face detector is used to determine whether the image information contains the human face information.

3. The method for awakening an intelligent robot according to claim 1, wherein in the step S2, position information and size information related to the human face information will be acquired when it is determined that the image information contains the human face information;
the step S3 specifically comprising:
step S31, forecasting model by means of the characteristic points formed via pre-training, and extracting a plurality of characteristic points in the human face information according to the position information and the size information;
step S32, determining contour information of each part in the human face information according to the plurality of pieces of characteristic point information;
step S33, acquiring a first distance from the center point of nose to the center point of left eye as well as a second distance from the center point of nose to the center point of right eye in the human face information;
step S34, determining whether the difference value between the first distance and the second distance is included in a pre-set range of difference value;
if so, it will be determined that the human face information indicates the front human face, and subsequently going to the step S4;
if not, it will be determined that the human face information does not indicate the front human face, and subsequently returning to the step S1.

4. The method for awakening an intelligent robot according to claim 1, wherein after the execution of the step S3, a staying-time determination step will be executed first if it is determined that the human face information contains the front human face, and subsequently the step S4 will be executed;
the staying-time determination step specifically comprising:
step A1, tracking and acquiring the human face information continuously, and keeping a record of the duration of the stay of the front human face;
step A2, determining whether the duration of the stay of the front human face exceeds a pre-set 1st threshold value:
if so, going to the step S4;
if not, returning to the step S1.

5. The method for awakening an intelligent robot according to claim 4, wherein in the step S2, position information and size information related to the human face information will be recorded when it is determined that the image information contains the human face information;
after the execution of the step A2, a distance determination step will be executed first if it is determined that the duration of the stay of the front human face exceeds the 1st threshold value, and subsequently the step S4 will be executed;
the distance determination step specifically comprising:
step B1, determining whether the size information is not less than a pre-set 2nd threshold value:
if so, going to the step S4;
if not, returning to the step S1.

6. The method for awakening an intelligent robot according to claim 1, wherein in the step S2, position information and size information related to the human face information will be recorded when it is determined that the image information contains the human face information;
after the execution of the step S3, a distance determination step will be executed first if it is determined that the human face information contains the front human face, and subsequently the step S4 will be executed;
the distance determination step specifically comprising:
step B1, determining whether the size information is not less than a pre-set 2nd threshold value:
if so, going to the step S4;
if not, returning to the step S1.

7. The method for awakening an intelligent robot according to claim 6, wherein after the execution of the step B1, a staying-time determination step will be executed first if it is determined that the size information is not less than the 2nd threshold value, and subsequently the step S4 will be executed:
the staying-time determination step specifically comprising:
step A1, tracking and acquiring the human face information continuously, and keeping a record of the duration of the stay of the front human face;
step A2, determining whether the duration of the stay of the front human face exceeds a pre-set 1st threshold value:
if so, going to the step S4;
if not, returning to the step S1.

8. The method for awakening an intelligent robot according to claim 4 or 7, wherein the 1st threshold value is 2 seconds.

9. The method for awakening an intelligent robot according to claim 5 or 6, wherein the 2nd threshold value is 400 pixels.

10. An intelligent robot **characterized by** using the method for awakening an intelligent robot as set forth in claims 1-9.
